Europäisches Patentamt

**European Patent Office**

**Office européen des brevets**

(11) Publication number: **0 346 096**
**A1**

# (12) EUROPEAN PATENT APPLICATION

(21) Application number: **89305740.6**

(22) Date of filing: **07.06.89**

(51) Int. Cl.⁴: **F 16 C 29/04**

(30) Priority: **07.06.88 GB 8813413**

(43) Date of publication of application:
**13.12.89 Bulletin 89/50**

(84) Designated Contracting States:
**AT BE CH DE ES FR GB GR IT LI LU NL SE**

(71) Applicant: **Fredericks, Conrad Erwin**
**9, Tavistock Terrace Upper Holloway**
**London N19 4BZ (GB)**

(72) Inventor: **Fredericks, Conrad Erwin**
**9, Tavistock Terrace Upper Holloway**
**London N19 4BZ (GB)**

(74) Representative: **Walter, Douglas Ernest et al**
**HASELTINE LAKE & CO. Hazlitt House 28 Southampton**
**Buildings Chancery Lane**
**London WC2A 1AT (GB)**

(54) **Support Bearings.**

(57) A bearing is provided which is arranged to support a relatively heavy item for movement along a track without such bearing exhibiting any relatively thin rotatable shell. A single bearing in accordance with the invention comprises a roller (3) movable along a convex rail (4), the roller (3) comprising a central concave portion (8) flanked by stop portions (9) and stub shafts (10) which latter are received in needle bearings (2) preferably formed from the metallic material "40-52-36". The roller (3) is rotatable about a substantially horizontal axis and an embodiment is described and illustrated in which a double bearing comprises two members (21) rotatable in opposite directions about substantially vertical axes.

Fig.1.

Fig.2.

EP 0 346 096 A1

## Description

### SUPPORT BEARINGS

This invention relates to bearings arranged to support relatively heavy items for movement along a track, for example, a movable part of a machine tool along a rectilinear rail of substantially circular cross section.

Known bearings for such purposes usually involve the provision of a fixed shaft or axle around which a relatively thin shell is rotatable, each such shell thus having to carry the full load or a significant proportion thereof. An object of the present invention is to provide support bearings which avoid the known constructions just mentioned and which, since they do not exhibit relatively thin rotatable shells, can reliably support considerably larger loads than is possible for the known constructions.

For a better understanding of the invention, and to show how the same made be carried into effect, reference will now be made, by way of example, to the accompanying drawings, in which:-

Fig. 1 is an elevation illustrating the construction of a single support bearing in accordance with the invention in a 50 mm single plain bogey, and

Fig. 2 is a part-sectional elevation showing the construction and arrangement of a pair of bearings in accordance with the invention in a 50 mm single V bogey.

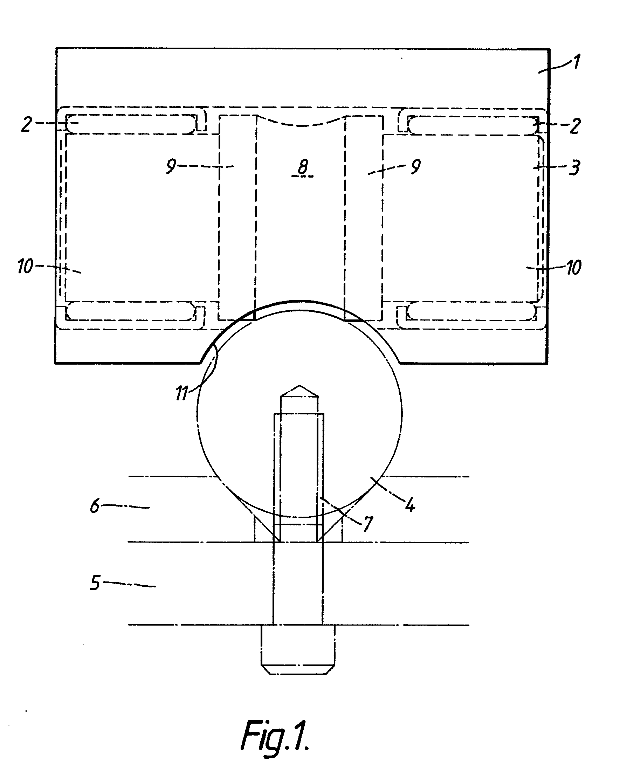

Referring firstly to Figure 1 of the drawings, the support bearing that is illustrated therein is mounted in a body 1 that might, purely for example, be a relatively heavy part of a machine tool that is movable rectilinearly along a 50 mm ball bush shaft or rail 4 of circular cross-section that is secured to mountings 6 on a base 5 by a number of relatively spaced, parallel and substantially vertically extending M12 bolts 7.

A 50 mm roller 3 is rotatable about a substantially horizontal axis in a cylindrical cavity in the body 1 and comprises a central portion 8 exhibiting a gently curved concaved contact surface, the central portion 8 being flanked by two symmetrically identical stop portions 9 and these stop portions 9, in turn, being flanked by two symmetrically identical stub shafts 10. The complete roller 3 is advantageously formed from high tensile steel and is freely rotatable about its own longitudinal axis due to the fact that each of the symmetrically identical stub shafts 10 is surrounded by a corresponding needle bearing 2 whose outer race is accommodated in one end of the aforementioned cylindrical cavity in the body 1. The needle bearings 2 are commercially available items that advantageously, but not essentially, are formed from the metallic material known as "40-52-36".

As will be evident from Fig. 1 of the drawings, an arched rebate 11 is formed in the base of the body 1 so as to extend perpendicular to the plane of Fig. 1. The rebate 11 has a concave curvature which, when the body 1 is mounted on the rail 4, is concentric with that rail 4, only a relatively small clearance being left between the convex surface of the rail 4 and the concave interior of the rebate 11. However, the central portion 8 of the roller 3 projects through an opening in the top of the rebate 11 and contacts an upper region of the rail 4. The convex curvature of the rail 4 and the concave curvature of the central portion 8 of the roller 3 substantially match one another although it has been found desirable that the concave curvature of the central portion 8 of the roller 3 should not have precisely the same radius as that of the convex surface of the rail 4 but should exhibit a so-called conformity radius that may be of the order of 1.06 x the radius of the shaft or rail 4. It will immediately be apparent that the various specific dimensions which have been mentioned are by way of example only and that it would be entirely possible to form a support bearing in accordance with the invention in various sizes appropriate to the particular purpose for which it is required and especially the particular loading to which it is likely to be exposed. It is noted, however, that the 50 mm example which has been described can entirely reliably support a load of 2 tons without any danger whatsoever of premature breakdown and without rapid wear.

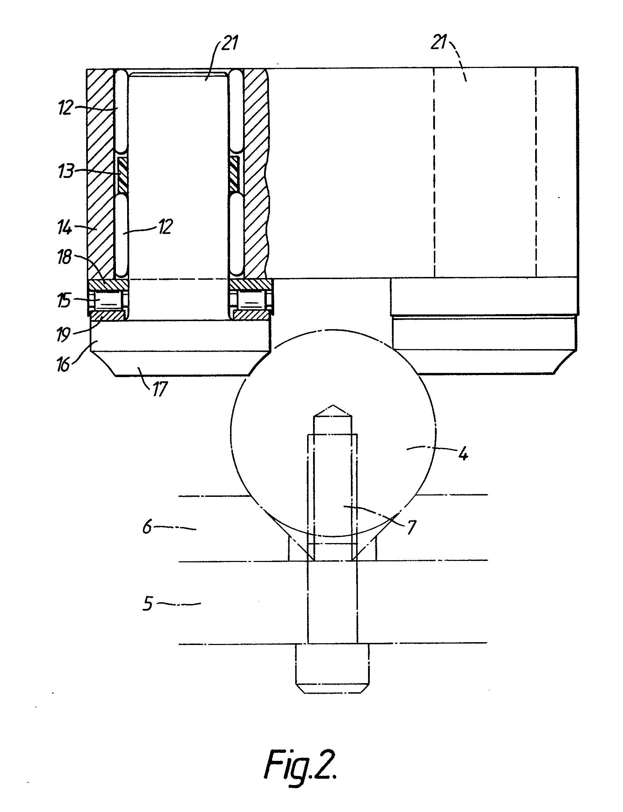

Referring now to Fig. 2 of the drawings, that Figure illustrates a double bearing in accordance with the invention, certain parts that are very similar or identical to parts which have already been described with reference to Fig. 1 of the drawings being indicated in Fig. 2 by the same references as are used in Fig. 1 thus rendering a repeated description thereof unnecessary. In this case, a body 14 equivalent to the previously mentioned body 1 exhibits two laterally spaced apart but parallel and substantially vertically extending cylindrical cavities in each of which is rotatably disposed a corresponding plain shaft 21. The lower end of each shaft 21 integrally carries an enlarged diameter head 16 and this head 16 has a lower extremity in the form of a tapering portion 17 whose downwardly tapering surface is of a concave curved configuration whose radius matches that of the convex surface of the rail 4 or which, preferably, has the aforementioned conformity radius which may be 1.06 x the radius of the rail 4.

The plain portion of each shaft 21 is surrounded in the corresponding cylindrical cavity by upper and lower needle bearings 12, a synthetic plastics collar 13 also surrounding the shaft 21 in spacing relationship between the upper and lower needle bearings 12. A ring 18 surrounds each shaft 21 just beneath the corresponding lower needle bearing 12 and a second ring 19 also surrounds each shaft 21 in abutment with the upper surface of the enlarged head 16 thereof. A commercially available roller thrust race 15 is interposed between each upper ring 18 and the corresponding lower second ring 19 and it will immediately be clear from Fig. 2 of the drawings that the body 14 is movable rectilinearly along the rail 4 in a direction perpendicular to the plane of Fig. 2 with the two shafts 21 freely rotating in opposite directions.

Support bearings of the kind which have been described may, and usually will, of course, be employed in multiple arrangements with spacing between them along the rail 4 and, in some cases, with parallel rails 4 each co-operating with one or more such support bearing. In addition to their efficiency and great strength, support bearings in accordance with the invention have the considerable advantage that the needle and thrust bearings which they exhibit are commercially available items that can be readily obtained from stockists of such materials, thus rendering the complete support bearings relatively inexpensive to produce.

**Claims**

1. A bearing arranged to support a relatively heavy item for movement along a track, characterised in that said bearing comprises at least one rotatable member (3, 21) moveable along a track member (4), said rotatable member (3, 21) being in the form of a roller (8) or a shaft (21).

2. A bearing according to Claim 1, characterised in that the roller (8) is rotatable about a horizontal or substantially horizontal axis.

3. A bearing according to Claim 1 or 2, characterised in that the roller (8) comprises a central concave portion flanked by stop portions (9) and stub shafts (10).

4. A bearing according to Claim 3, characterised in that said stub shafts (10) are rotatably received in corresponding needle bearings (2).

5. A bearing according to Claim 4, characterised in that said needle bearings (2) are formed from the metallic material known as "40-52-36".

6. A bearing according to Claim 3, 4 or 5, characterised in that said track member (4) exhibits a convex surface and in that the concave surface of said roller (8) has a conformity radius which is 1.06 times that of the convex surface of the track member (4).

7. A bearing according to Claim 1, characterised in that it exhibits two rotatable members (21) each of which may revolve around a corresponding vertical or substantially vertical axis.

8. A bearing according to Claim 7, characterised in that each member (21) is rotatable in corresponding upper and lower needle bearings (12), and in that each such member (21) is formed, at its lower end, with an enlarged head (16) and with a concave downwardly tapering portion (17) which engages the track member (4).

*Fig.1.*

Fig.2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-  845 675  (ANDERSON) <br> * Page 2, lines 79-85; figure 6 * <br> --- | 1-3,7 | F 16 C   29/04 |
| X | AU-B-  548 032  (ANTHONY BEARINGS) <br> * Whole document * <br> --- | 1-3 | |
| X | MACHINE DESIGN, vol. 33, no. 24, 23rd November 1961, page 116; "Crosswise rollers support shaft" <br> --- | 1,2,4 | |
| X | GB-A-1 090 087  (ZEIDLER) <br> * Whole document * | 1,2 | |
| A | | 3,4 | |
| | --- | | |
| A | FR-A-2 208 068  (KRAHENBUHL) <br> * Page 3, lines 17-19; page 4 * <br> --- | 6 | |
| A | CH-A-  512 338  (PFISTER) <br> * Figure 2 * <br> ----- | 7 | |

TECHNICAL FIELDS
SEARCHED (Int. Cl.4)

F 16 C
B 23 Q

The present search report has been drawn up for all claims

| Place of search | Date of completion of the search | Examiner |
|---|---|---|
| THE HAGUE | 25-08-1989 | ORTHLIEB CH.E. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

&  : member of the same patent family, corresponding
document

EPO FORM 1503 03.82 (P0401)